# EUROPÄISCHE PATENTSCHRIFT

(11) **EP 1 201 945 B1**
(45) Veröffentlichungstag und Bekanntmachung des Hinweises auf die Patenterteilung: **28.02.2007**
(21) Anmeldenummer: 01811002.3
(22) Anmeldetag: 15.10.2001
(51) Int. Cl.: F16B 37/12

(54) **Befestigungselement**
Fastening element
Elément de fixation

(30) Priorität: 23.10.2000 DE 10052448
(43) Veröffentlichungstag der Anmeldung: 02.05.2002
(73) Patentinhaber: HILTI Aktiengesellschaft, 9494 Schaan (LI)
(72) Erfinder: Hoffmann, Armin, 86899 Landsberg (DE)
(74) Vertreter: Wildi, Roland

(56) Entgegenhaltungen:
- EP-A- 0 423 657
- EP-A- 1 130 274
- DE-A- 19 831 001
- GB-A- 900 672

## Beschreibung

Die Erfindung betrifft ein Verbindungselement für Bolzen mit einer Aussenprofilierung, mit einem Aufnahmeteil für den Bolzen, das mit einer Bohrung versehen ist, in der wenigstens eine, als Verriegelungselement wirkende, Feder angeordnet ist, die formschlüssig mit der Aussenprofilierung zusammenwirkt.

Verbindungselemente der oben genannten Art dienen zum Festlegen von Bolzen mit einer Aussenprofilierung. Eine bekannte Lösung weist einen Aufnahmeteil mit radial zum Bolzen in Setzrichtung federnden Gewindeteilen auf. Beim Setzen des Bolzens federn die Gewindeteile im wesentlichen radial nach aussen und greifen danach in die nächstliegende Aussenprofilierung des Bolzens ein. Tritt eine Belastung entgegen der Setzrichtung auf, so werden die Gewindeteile vollständig in die Aussenprofilierung gedrückt und der Bolzen ist fixiert.

Vorteilhaft an dieser bekannten Lösung ist, dass das Verbindungselement einfach und wirtschaftlich herstellbar ist. Ferner gestaltet sich dessen Anwendung handlich. Nachteilig an dieser bekannten Lösung ist, dass der Bolzen nur in eine Richtung, entgegen der Setzrichtung, belastbar ist. Dadurch ist die Anwendung des bekannten Verbindungselementes sehr beschränkt.

Ein weitere bekannte Lösung, die in der DE-A1-19831001 beschrieben ist, weist eine als Verriegelungselement wirkende Feder auf, die formschlüssig mit der Aussenprofilierung des Bolzens zusammenwirkt.

Der Vorteil an dieser bekannten Lösung ist, dass das Verbindungselement auf einen Bolzen mit Aussenprofilierung ohne Probleme aufschiebbar ist. Die Feder weitet sich dabei und gleitet auf der Oberfläche des Bolzens, insbesondere der Aussenprofilierung. Dadurch erübrigt sich eine Schraubbewegung.

Nachteilig am bekannten Stand der Technik ist, dass auch diese Lösung nur in eine Richtung wirkt. Ferner eignet sich diese bekannte Lösung nicht für sicherheitsrelevante Verbindungen, da unter dynamischer Belastung des Bolzens die Verbindung nicht sicher gewährleistet ist.

Der vorliegenden Erfindung liegt die Aufgabe zugrunde, eine Verbindungselement für Bolzen mit einer Aussenprofilierung zu schaffen, die schnell und einfach montierbar ist. Ferner soll das Verbindungselement auch für sicherheitsrelevante Verbindungen einsetzbar sein und in beide Richtungen axial zum Bolzen belastbar sein.

Erfindungsgemäss wird die Aufgabe dadurch gelöst, dass das Aufnahmeteil in der Bohrung zwei, relativ zueinander verschiebbare, zur Feder und zueinander koaxial gelagerte, die Feder einschliessende Konushülsen mit je einer Durchgangsbohrung aufweist, wobei die Durchgangsbohrung sich zumindest an dem, der Feder zugewandten Längsende zur Feder hin konisch erweitert, und der grösste Innendurchmesser der Durchgangsbohrung grösser als der Aussendurchmesser der Feder und der kleinste Innendurchmesser der Durchgangsbohrung kleiner als der Aussendurchmesser der Feder, jedoch zumindest gleich dem Aussendurchmesser des Bolzens, ist.

Dadurch, dass die Feder zwischen zwei relativ zueinander verschiebbaren Konushülsen gelagert ist, kann der Bolzen durch Verschieben einer oder beider Konushülsen festgelegt werden. Die, zumindest teilweise, konisch ausgebildete Durchgangsbohrung an dem der Feder zugewandten Längsende der Konushülse bewirkt beim axialen Verspannen der beiden Konushülsen relativ zueinander ein Andrücken der Feder in die Aussenprofilierung des Bolzens und damit einen Formschluss zwischen Feder und Bolzen. Die Abstimmung des Aussendurchmessers der Feder mit der Ausbildung der Durchgangsbohrung gewährleistet einerseits, dass die Feder zumindest bei axialem Verspannen zumindest teilweise in die Durchgangsbohrungen der beiden Konushülsen aufgenommen wird und andererseits, dass die Feder die Durchgangsbohrung nicht vollständig passieren kann. Sind die beiden Konushülsen nicht gegeneinander verspannt, kann ein Bolzen mit einer Aussenprofilierung mühelos in das Verbindungselement gedrückt und darin verschoben werden. Die Feder weitet sich dabei radial und gleitet über die Aussenprofilierung des Bolzens.

Vorzugsweise ist die Feder eine zylinderförmige, einteilig ausgebildete, zwei Drahtenden aufweisende Drahtfeder mit mehreren Windungen. Somit ist eine handelsübliche Feder einsetzbar, was sich herstellungstechnisch positiv auswirkt. Ferner gewährleistet eine zylinderförmige Feder eine kompakte Bauweise des Verbindungselementes. Selbstverständlich können auch anders geformte Federn Anwendung finden. Wichtig ist dabei, dass die beiden Längsenden der Feder teilweise in die Durchgangsbohrung der korrespondierenden Konushülsen bringbar sind, um den Bolzen fixieren zu können. Anstelle von Draht kann ein anderes Material, beispielsweise Kunststoff, Anwendung finden.

Die Konushülsen weisen vorteilhafterweise an dem der Drahtfeder zugewandten Längsende jeweils einen zur Drahtfeder hin offenen Längsschlitz auf, dessen eine Längswandung mit dem korrespondierenden Drahtende als Anschlag zusammenwirkt, um eine Drehsicherung der Feder gegenüber den Konushülsen sicherzustellen. In einer bevorzugten Ausführung weisen die Konushülsen einen durchgehenden Längsschlitz mit einer Breite auf, die dem 0.25 bis 2-fachen der Wandstärke der Konushülse entspricht.

Vorzugsweise ist das Aufnahmeteil zweiteilig ausgebildet, wobei die beiden Teile axial zum Bolzen relativ zueinander verschiebbar sind. Dadurch können die beiden Konushülsen mittels des Aufnahmeteils relativ zueinander bewegt werden. Beispielsweise kann dies durch eine Gewindeverbindung realisiert werden. Die beiden Elemente bilden in diesem Beispiel für die jeweils korrespondierende Konushülse einen Anschlag und werden durch gegenseitiges Verdrehen relativ zueinander bewegt.

Die beiden Teile des Aufnahmeteils stehen je mit der korrespondierenden Konushülse in Verbindung, um eine kontrollierte Führung der Konushülsen sicherzustellen.

Um die radiale Weite der Feder stellbar zu gestalten, überragt eine Konushülse vorzugsweise das Aufnahmeteil mit einem Angriffsteil und die gegenüberliegende Konushülse steht drehfest mit dem Aufnahmeteil in Verbindung. Somit ist die radiale Weite der Feder durch Verdrehen des Angriffteils gegenüber dem Aufnahmeteil stellbar, da die gegenüberliegende Konushülse drehfest mit dem Aufnahmeteil in Verbindung steht und die Drahtenden der Feder in der jeweils korrespondierenden Konushülse einen Anschlag finden. Über die radiale Weite der Feder lässt sich auch die Verbindung zwischen Bolzen und Verbindungselement steuern.

Vorzugsweise weist das Aufnahmeteil koaxial zur Bohrung eine Durchgangsbohrung auf, deren Durchmesser etwa dem Aussendurchmesser des Bolzens entspricht, um eine stufenlose Justierung des Bolzens gegenüber dem Verbindungselement zu ermöglichen. Dadurch kann der Bolzen durch das Verbindungselement hindurch bewegt werden.

Die Längsschlitze sind vorteilhafterweise im wesentlichen V-förmig ausgebildet und erweitern sich in Richtung der Feder, um die Aufnahme der Federenden in die Durchgangsbohrung der Konushülsen zu erleichtern.

In einer bevorzugten Weise sind die Konushülsen und die Feder aus Federstahl, insbesondere aus gehärtetem Federstahl, um eine hohe Elastizität und Belastbarkeit sicherzustellen.

Vorteilhafterweise findet das erfindungsgemässe Verbindungselement Verwendung als Schienenmutter oder dergleichen.

In einer weiteren bevorzugten Ausführungsform weist die Feder Innendurchmesser auf, der zumindest dem Aussendurchmesser des Bolzens entspricht. Vorteilhaft bei dieser Ausführungsform ist, dass die Windungssteigung der Feder nicht der Gewindesteigung des Aussengewindes des Bolzens entsprechen muss. Dadurch sind Bolzen mit beliebigen Aussenprofilierungen anwendbar. Die Verbindung wird durch ein Verspannen der Konushülsen gegeneinander bewirkt.

Die Erfindung wird nachstehend anhand eines Ausführungsbeispieles näher erläutert. Es zeigen:
- Fig. 1: ein erfindungsgemässes Verbindungselement im Querschnitt;
- Fig. 2: eine Seitenansicht des Verbindungselementes ohne Aufnahmeteil;
- Fig. 3: das Verbindungselement ohne Aufnahmeteil der Fig. 2 um 180° um die Längsachse gedreht;
- Fig. 4: ein erfindungsgemässes Verbindungselement als Schienenmutter ausgestaltet;
- Fig. 5: eine weitere Ausführungsform eines erfindungsgemässen Verbindungselements.

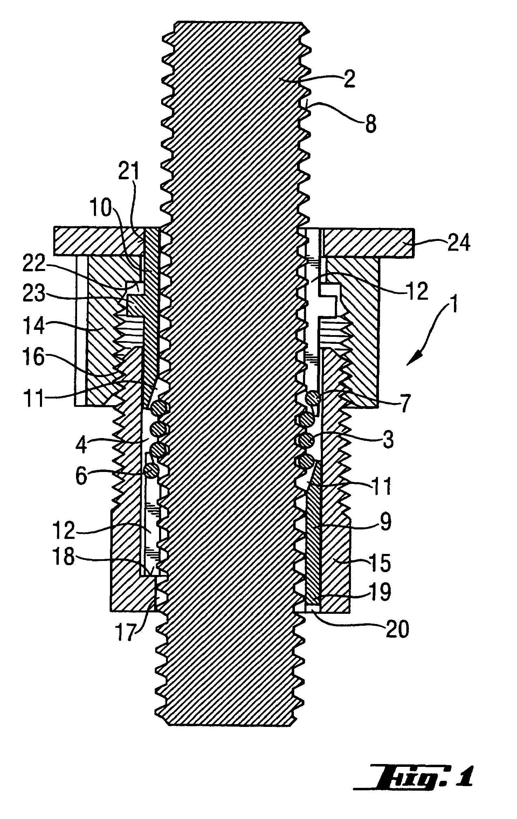

In den Fig.1 bis 3 ist ein erfindungsgemässes Verbindungselement für einen Bolzen 2 mit einem Aufnahmeteil 1 für den Bolzen 2 und eine als Verriegelungselement wirkende Feder 3 dargestellt. Das Aufnahmeteil 1 weist eine Bohrung 4 zur Aufnahme der Feder 3 auf.

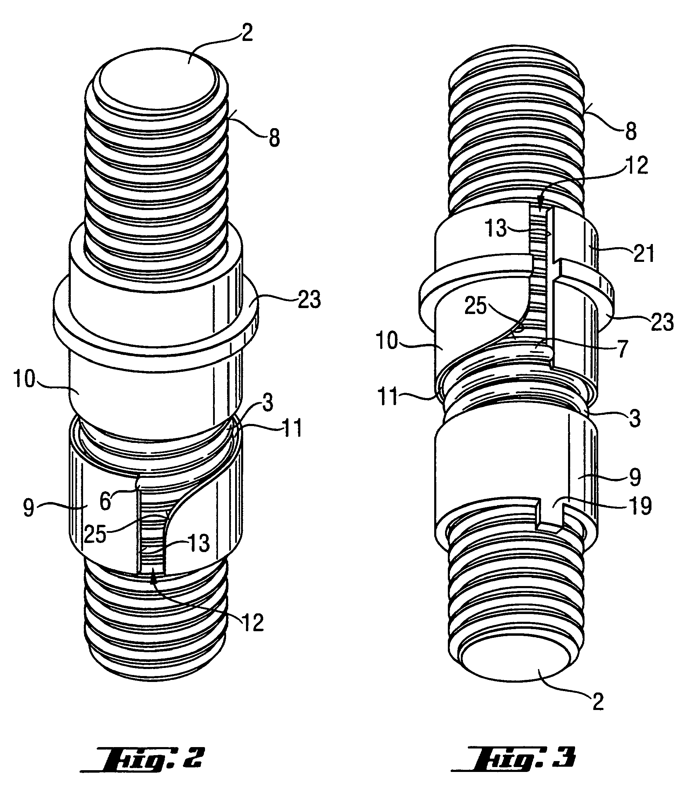

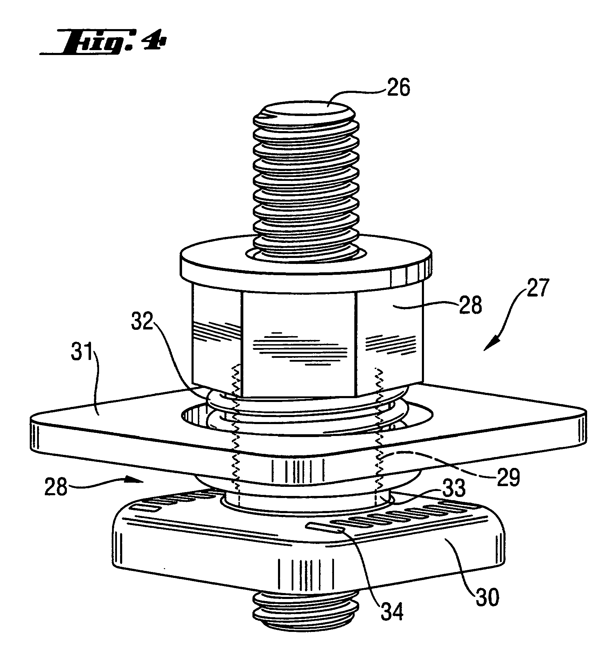

Die Feder 3 ist eine im wesentlichen zylinderförmige, zwei Drahtenden 6, 7 aufweisende Drahtfeder, die formschlüssige mit einer Aussenprofilierung, insbesondere einem Aussengewinde 8 des Bolzens 2 zusammenwirkt, wie dies insbesondere aus Fig. 2 und 3 hervorgeht. Etwa zwei bis drei Windungen greifen formschlüssig in das Aussengewinde 8 des Bolzens 2. Die Windungssteigung entspricht etwa der Steigung des Aussengewindes 8 und der Aussendurchmesser etwa dem Durchmesser des Aussengewindes. Die beiden Drahtenden 6, 7 sind derart gebogen, dass sie auf etwa einem Viertel Windung der Feder 3 das Aussengewinde 8 des Bolzens 2 radial überragen.

Im Bereich der Drahtenden 6, 7 ist jeweils eine Konushülse 9, 10 mit einer zumindest teilweise konischen Durchgangsbohrung 11 angeordnet, wobei sich der Innendurchmesser entgegen der Feder 3 erweitert. Der Winkel des konischen Teils der Durchgangsbohrung 11 beträgt 15 bis 20° und entspricht damit etwa der Gewindesteigung des Aussengewindes 8. Der grösste Innendurchmesser der Durchgangsbohrung 11 entspricht mindestens dem Aussendurchmesser der Feder 3, sodass diese teilweise in die Durchgangsbohrung 11 bringbar ist. Der kleinste Innendurchmesser entspricht zumindest dem Aussendurchmesser des Bolzens 2 und ist kleiner als der Aussendurchmesser der Feder 3. Die beiden Konushülsen 9, 10 weisen je einem Längsschlitz 12 auf, in den das jeweils korrespondierende Längsende der Feder 3 bringbar ist. Eine Längswandung 13 des Längsschlitzes 12 dient dem Drahtende 6 oder 7 als Anschlag. Die gegenüberliegende Längswandung des Längsschlitzes 12 weist eine gerundete Ecke 25 auf.

Das Aufnahmeteil 1 weist eine zur Bohrung 4 koaxial verlaufende, durchgehende Aufnahmebohrung 17 auf, deren Durchmesser etwa dem Aussendurchmesser des Bolzens 2 entspricht. Das Aufnahmeteil 1 wird durch einen Mutternteil 14 und einen Gewindeteil 15 gebildet. Der Mutternteil 14 ist durch eine Gewindeverbindung 16 auf den Gewindeteil 15 aufschraubbar und dadurch axial zum Bolzen 2 verschiebbar gelagert. Die Konushülse 9 wirkt mit einer am Ende der Bohrung 4 angeordneten Anschlagfläche 18 zusammen und weist an dem der Anschlagfläche 18 zugewandten Längsende einen Steg 19 auf, der in eine komplementär dazu ausgebildete Ausnehmung 20 im Gewindeteil 15 im Bereich der Anschlagfläche 18 bringbar ist. Der Steg 19 und die Ausnehmung 20 bewirken eine Drehsicherung zwischen dem Gewindeteil 15 und der korrepsondierenden Konushülse 9. Die gegenüberliegende Konushülse 10 überragt das Mutternteil 14 axial zum Bolzen 2 mit einem Angriffsteil 21 und weist etwa mittig einen über zumindest teilweise über den Umfang derselben verlaufenden Steg auf, der mit einer Gegenschulter 22 am Mutternteil 14 als Anschlag zusammenwirkt.

Dreht ein Anwender die Konushülse 10 über eine Scheibe 24, die beispielweise formschlüssig in den Angriffsteil 21 greift, nach rechts, wird die Feder 3 aufgebogen, gibt die Gewindegänge der Aussenproflierung 8 frei und legt sich an den Innendurchmesser der Bohrung 4 an. Der Bolzen 2 ist somit axial verschiebbar. Lässt der Anwender die Scheibe 24 wieder los, dreht sich die Feder 3 wieder zusammen und fixiert den Bolzen an der gewünschten Stelle. Die Windungszahl der Feder 3 ist so gewählt, das die Drahtenden 6, 7 um ca. 180° radial versetzt sind. Dadurch wird erreicht, dass sich die Feder 3 auch im unbelasteten Zustand in der Bohrung 4 des Gewindeteiles 15 zentriert. Beide Konushülsen 9, 10 sind auf einer Kante der Längsschlitze mit einer gerundeten Ecke 25 versehen, sodass der ausgestellte Teil der Drahtenden 6, 7 frei liegt. Zieht man bei vorfixiertem Bolzen nun den Mutternteil 14 über Gewindeverbindung 16 am Gewindeteil 15 an, werden die Konushülsen 9, 10 über den Steg 23 über die Feder 3 geschoben. Da alle drei Teile aus gehärtetem Federstahl gefertigt sind, wird die Feder 3 an beiden konisch ausgebildeten Durchgangsbohrungen 11 einen kompletten Windungsgang in die Aussenprofilierung 8 des Bolzens 2 gedrückt. Durch den sehr flach gewählten Winkel der konischen Durchgangsbohrung 11 entsteht bei Zug wie bei Druckbelastung an dem Bolzen 2 zusätzlich ein Nachspreizeffekt, der die Traglast noch erhöht.

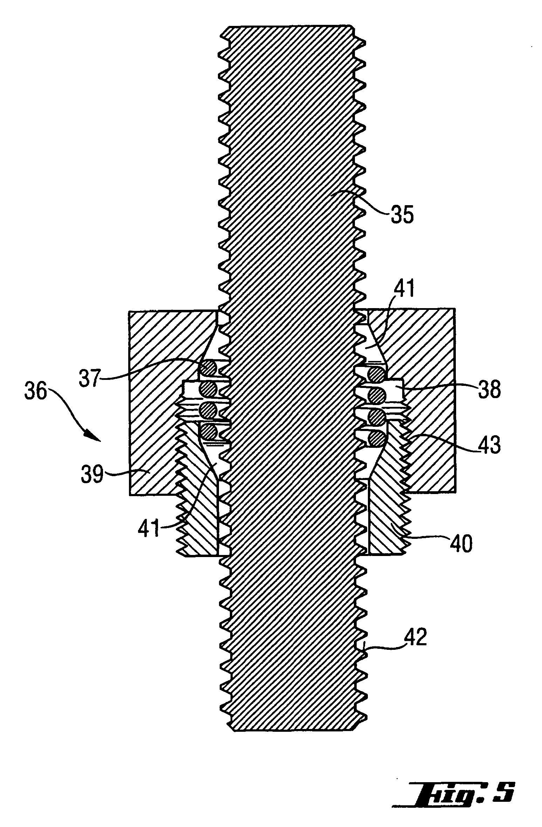

In der Fig. 4 ist ein erfindungsgemässes Verbindungselement als Schienenbefestigungsmittel mit einem Bolzen 26 und ein insgesamt mit 27 bezeichneter Aufnahmeteil dargestellt. Das Aufnahmeteil 27 weist einen Mutternteil 28 und einen Gewindeteil 29 auf, die durch eine Gewindeverbindung miteinander verschraubbar sind. Der Gewindeteil 29 weist an dem dem Mutternteil 28 abgewandten Längsende ein Hintergriffteil 30 auf. Zwischen dem Mutternteil 28 und dem Hintergriffteil 30 ist eine axial zum Bolzen 26 verschiebbarer Gegenhalter 31 angeordnet. Zur Führung des Gegenhalters 31 weist dieser eine konische Durchgangsbohrung auf, die sich in Richtung des Mutternteiles 28 erweitert und zur teilweisen Aufnahme einer Spannfeder 32 dient. Auf der dem Hintergriffteil 30 zugewandten Seite ist koaxial zur Durchgangsbohrung eine Abstandhülse 33 angeordnet, die einen Mindestabstand zwischen Hintergriffteil 30 und dem Gegenhalter 31 sicherstellt.

An der dem Gegenhalter 31 zugewandten Seite des Hintergriffteils 30 sind, im Bereich zweier sich gegenüberliegender Kanten, Verzahnungen 34 eingeprägt, die in eine Gegenverzahnung innerhalb einer nicht dargestellten Schiene, beispielsweise C-förmigen Schiene, einrasten. Die Spannfeder 32 weist eine geringe Vorspannung auf, sodass das Hintergriffteil 30 in der Gegenverrastung der Schiene gehalten wird. Wird das Mutternteil 28 angezogen, drückt sich die Spannfeder 32 zusammen und verklemmt das Hintergriffteil 30 in der Schiene. So wird durch einen Arbeitsgang der Bolzen 26 an der Schiene in allen Belastungsrichtungen endfixiert.

In der Fig. 5 ist eine weitere Ausführungsform eines erfindungsgemässen Verbindungselements für einen Bolzen 35 mit einem Aufnahmeteil 36 für den Bolzen 35 und eine als Verriegelungselement wirkende Feder 37 dargestellt. Das Aufnahmeteil 36 weist eine Bohrung 38 zur Aufnahme der Feder 37 auf. Im Bereich der Drahtenden der Feder 37 ist jeweils eine Konushülse 39, 40 mit jeweils einer zumindest teilweise konischen Durchgangsbohrung 41 angeordnet, wobei sich der Innendurchmesser der Durchgangsbohrung 41 entgegen der Feder 37 erweitert. Im Gegensatz zu den bisher aufgeführten Ausführungen greift die Feder 37 im Ruhezustand nicht in ein am Bolzen 35 angeordnetes Aussengewinde 42. Die beiden Konushülsen 39,40 sind durch eine Schraubverbindung 43 miteinander drehbar verbunden. Werden die Konushülsen 39, 40 derart gegeneinander verschraubt, dass sie sich relativ zueinander bewegen, wird die Feder 37 im Bereich der konischen Durchgangsbohrung 41 in das Aussengewindes 42 des Bolzens 35 gepresst. Somit besteht zwischen dem Aufnahmeteil 36 und dem Bolzen eine formschlüssige oder zumindest kraftschlüssige, lösbare Verbindung.

## Patentansprüche

1. Verbindungselement für Bolzen (2, 26) mit einer Aussenprofilierung, mit einem Aufnahmeteil (1, 27) für den Bolzen (2, 26), das mit einer Bohrung (4) versehen ist, in der wenigstens eine, als Verriegelungselement wirkende, Feder (3) angeordnet ist, die formschlüssig mit der Aussenprofilierung zusammenwirkt, **dadurch gekennzeichnet, dass** das Aufnahmeteil (1, 27) in der Bohrung zwei, relativ zueinander verschiebbare, zur Feder (3) und zueinander koaxial gelagerte, die Feder (3) einschliessende Konushülsen (9, 10) mit je einer Durchgangsbohrung (11) aufweist, wobei die Durchgangsbohrung (11) sich zumindest an dem, der Feder (3) zugewandten Längsende zur Feder (3) hin konisch erweitert, und der grösste Innendurchmesser der Durchgangsbohrung (11) grösser als der Aussendurchmesser der Feder (3) und der kleinste Innendurchmesser der Durchgangsbohrung (11) kleiner als der Aussendurchmesser der Feder (3), jedoch zumindest gleich dem Aussendurchmesser des Bolzens (2, 26) ist.

2. Verbindungselement nach Anspruch 1, **dadurch gekennzeichnet, dass** die Feder (3) eine zylinderförmige, einteilig ausgebildete, zwei Drahtenden (6, 7) aufweisende Drahtfeder mit mehreren Windungen ist.

3. Verbindungselement nach Anspruch 2, **dadurch gekennzeichnet, dass** die Konushülsen (9, 10) an dem der Drahtfeder zugewandten Längsende jeweils einen zur Drahtfeder hin offenen Längsschlitz (12) aufweisen, dessen eine Längswandung (13) mit dem korrespondierenden Drahtende (6, 7) als Anschlag zusammenwirkt.

4. Verbindungselement nach einem der Ansprüche 1 bis 3, **dadurch gekennzeichnet, dass** die Konushülsen (9, 10) einen durchgehenden Längsschlitz (12) aufweisen.

5. Verbindungselement nach einem der Ansprüche 1 bis 4, **dadurch gekennzeichnet, dass** das Aufnahmeteil (1) zweiteilig ausgebildet ist, wobei die beiden Teile (14, 15) axial zum Bolzen (2, 26) relativ zueinander verschiebbar sind.

6. Verbindungselement nach Anspruch 5, **dadurch gekennzeichnet, dass** die beiden Teile (14,15) des Aufnahmeteils (1, 27) je mit der korrespondierenden Konushülse (9,10) in Verbindung stehen.

7. Verbindungselement nach Anspruch 6, **dadurch gekennzeichnet, dass** eine Konushülse (10) das Aufnahmeteil (1, 27) mit einem Angriffsteil (21) überragt und die gegenüberliegende Konushülse (9) drehfest mit dem Aufnahmeteil (1) in Verbindung steht.

8. Verbindungselement nach einem der Ansprüche 1 bis 7, **dadurch gekennzeichnet, dass** das Aufnahmeteil (1, 27) koaxial zur Bohrung (4) eine Durchgangsbohrung (17) aufweist, deren Durchmesser etwa dem Aussendurchmesser des Bolzens (2) entspricht.

9. Verbindungselement nach einem der Ansprüche 3 bis 8, **dadurch gekennzeichnet, dass** der Längsschlitze (12) im wesentlichen V-förmig ausgebildet ist und sich in Richtung der Feder (3) erweitert.

10. Verbindungselement nach einem der Ansprüche 1 bis 9, **dadurch gekennzeichnet, dass** die Konushülsen (9, 10) und die Feder (3) aus Federstahl sind, insbesondere aus gehärtetem Federstahl.

## Claims

1. Connecting element for bolts (2, 26) having an outer profile, having a receiving member (1, 27) for the bolt (2, 26), the receiving member (1, 27) being provided with a bore (4) wherein at least one spring (3) acting as a locking element is arranged which cooperates with positive engagement with the outer profile, **characterised in that** the receiving member (1, 27), within the bore, has two cone sleeves (9, 10) that are displaceable relative to each other, are mounted coaxially with respect to the spring (3) and with respect to each other, and embrace the spring (3), and that each has a through bore (11), wherein the through bore (11) widens conically towards the spring (3) at least at the longitudinal end facing the spring (3), and the largest inner diameter of the through bore (11) is larger than the outer diameter of the spring (3) and the smallest inner diameter of the through bore (11) is smaller than the outer diameter of the spring (3), but at least equal to the outer diameter of the bolt (2, 26).

2. Connecting element according to claim 1, **characterised in that** the spring (3) is a cylindrical wire spring with a plurality of turns, made in one piece and having two wire ends (6, 7).

3. Connecting element according to claim 2, **characterised in that** each of the cone sleeves (9, 10) has a longitudinal slot (12) at the longitudinal end facing the wire spring open towards the wire spring, a longitudinal wall (13) of the longitudinal slot (12) cooperating as an abutment with the corresponding wire end (6, 7).

4. Connecting element according to one of claims 1 to 3, **characterised in that** the cone sleeves (9, 10) have a continuous longitudinal slot (12).

5. Connecting element according to one of claims 1 to 4, **characterised in that** the receiving member (1) is formed in two parts, the two parts (14, 15) being displaceable relatively to each other axially of the bolt (2, 26).

6. Connecting element according to claim 5, **characterised in that** the two parts (14, 15) of the receiving member (1, 27) are respectively connected with the corresponding cone sleeve (9, 10).

7. Connecting element according to claim 6, **characterised in that** one cone sleeve (10), by way of an engagement member (21), extends beyond the receiving member (1, 27), and the opposite cone sleeves (9) is connected with the receiving member (1) so as to be fast against rotation.

8. Connecting element according to one of claims 1 to 7, **characterised in that** the receiving member (1, 27) has a through bore (17) which is coaxial with respect to the bore (4) and whose diameter corresponds approximately to the outer diameter of the bolt (2).

9. Connecting element according to one of claims 3 to 8, **characterised in that** the longitudinal slots (12) is essentially made V-shaped and widens in the direction of the spring (3).

10. Connecting element according to one of claims 1 to 9, **characterised in that** the cone sleeves (9, 10) and the spring (3) are made of spring steel, especially of hardened spring steel.

## Revendications

1. Élément de liaison pour goujons (2, 26) à profilage extérieur, comprenant une partie réceptrice (1, 27) destinée au goujon (2, 26) et pourvue d'un perçage (4) dans lequel est disposé au moins un ressort (3) qui fait fonction d'élément de verrouillage et coopère par complémentarité de formes avec le profilage extérieur, **caractérisé en ce que** la partie réceptrice (1, 27) comporte, dans le perçage, deux manchons coniques (9, 10), lesquels sont pourvus chacun d'un trou débouchant (11), coulissent l'un par rapport à l'autre, sont montés coaxialement au ressort (3) et l'un à l'autre et entourent le ressort (3), le trou débouchant (11) s'élargissant sous forme conique en direction du ressort (3) au moins à son extrémité longitudinale tournée vers le ressort (3), et le plus grand diamètre intérieur du trou débouchant (11) étant supérieur au diamètre extérieur du ressort (3), et le plus petit diamètre intérieur du trou débouchant (11) étant inférieur au diamètre extérieur du ressort (3), mais au moins égal au diamètre extérieur du goujon (2, 26).

2. Élément de liaison selon la revendication 1, **caractérisé en ce que** le ressort (3) est un ressort à boudin à plusieurs spires de forme cylindrique, conçu d'un seul tenant et comportant deux extrémités de fil métallique (6, 7).

3. Élément de liaison selon la revendication 2, **caractérisé en ce que**, à leur extrémité longitudinale tournée vers le ressort à boudin, les manchons coniques (9, 10) sont chacun pourvus d'une fente longitudinale (12) qui est ouverte en direction du ressort à boudin et dont une paroi longitudinale (13) coopère en tant que butée avec l'extrémité de fil métallique correspondante (6, 7).

4. Élément de liaison selon une des revendications 1 à 3, **caractérisé en ce que** les manchons coniques (9, 10) sont pourvus d'une fente longitudinale continue (12).

5. Élément de liaison selon une des revendications 1 à 4, **caractérisé en ce que** la partie réceptrice (1) est conçue en deux parties, les deux parties (14, 15) pouvant coulisser l'une par rapport à l'autre dans le sens axial du goujon (2, 26).

6. Élément de liaison selon la revendication 5, **caractérisé en ce que** les deux parties (14, 15) de la partie réceptrice (1, 27) sont chacune reliées au manchon conique correspondant (9, 10).

7. Élément de liaison selon la revendication 6, **caractérisé en ce qu'**un manchon conique (10) dépasse de la partie réceptrice (1, 27) par l'intermédiaire d'une partie d'attaque (21), et le manchon conique opposé (9) est solidarisé en rotation à la partie réceptrice (1).

8. Élément de liaison selon une des revendications 1 à 7, **caractérisé en ce que** la partie réceptrice (1, 27) est pourvue, coaxialement au perçage (4), d'un trou débouchant (17) dont le diamètre correspond sensiblement au diamètre extérieur du goujon (2).

9. Élément de liaison selon une des revendications 3 à 8, **caractérisé en ce que** la fente longitudinale (12) est conformée sensiblement en V et s'élargit en direction du ressort (3).

10. Élément de liaison selon une des revendications 1 à 9, **caractérisé en ce que** les manchons coniques (9, 10) et le ressort (3) sont en acier à ressort, en particulier en acier à ressort trempé.
